# EUROPEAN PATENT APPLICATION

(11) **EP 4 329 129 A2**
(43) Date of publication of application: **28.02.2024**
(21) Application number: 23193506.5
(22) Date of filing: 25.08.2023
(51) Int. Cl.: H02J 3/14, H02J 13/00

(54) **AN ENERGY MANAGEMENT UNIT FOR MANAGING ELECTRIC DEVICES AND A METHOD FOR ENERGY MANAGEMENT OF ELECTRIC DEVICES**

(30) Priority: 26.08.2022 FI 20227115
(71) Applicant: Ab TOTECH Oy, 68920 Forsby (FI)
(72) Inventor: Byström, Tommy, 68600 Jakobstad (FI); Pitkäkangas, Toni, 68920 Forsby (FI)
(74) Representative: Kolster Oy Ab

(57) **Abstract**

The invention relates to the field of electric devices in general and to management and control of electric devices, and more particularly to an energy management unit for managing electric devices and a method for energy management of electric devices. The energy management unit (10) of the present invention is a cloud connected IoT device configured to receive settings data comprising the preset energy demand levels of said electric devices (101-103, 109) and to receive external data comprising the current and upcoming spot-price of electricity. The energy management unit (10) is arranged to receive device data comprising status data and/or measurement data of said electric devices (101-103, 109), and to determine a management action schedule based on said settings data and on said external data and on said device data. The energy management unit (10) is further configured to manage said electric devices (101-103, 109) utilising said management action schedule.

## Description

### FIELD OF THE INVENTION

The present invention relates to the field of electric devices in general and to management and control of electric devices, and more particularly to an energy management unit for managing electric devices and a method for energy management of electric devices.

### BACKGROUND OF THE INVENTION

In the field of management and control of electric devices there is a problem with managing the electric devices so that the scares energy resources are optimally utilised. During windy and stormy conditions, there can be a lot of wind energy power available in the electric power distribution network (Power Grid) but there can also be interruptions in the power supply due to the storm.

In prior art solutions, the way small scale solar power production sites are usually implemented today presents great limitations, and these limitations will become more noticeable in the future. The problem is that said small scale solar power production sites all overproduce and export their excess energy to the power-grid more or less at the same time of day and not taking into account the different level of supply and demand for energy during different hours of the day.

There is a need for an energy management unit for managing electric devices which can be used to control electric devices to use energy when energy supply is high and to delay using energy during energy demand peaks.

In today's demanding environment, there is a need for a more effective and elegant solution for an energy management unit for managing electric devices and a need for a more advanced method for energy management of electric devices.

Today there is a special emphasis on green infrastructure also the field of management and control of electric devices. There is a demand in the market for an energy management unit for managing electric devices and for a method for energy management of electric devices that would provide a better and more advanced overall energy management electric devices compared to the current prior art solutions.

### BRIEF DESCRIPTION OF THE INVENTION

The object of the invention is to introduce an energy management unit for managing electric devices and a method for energy management of electric devices, which would provide a better and more advanced overall energy management electric devices. Advantageous embodiments are furthermore presented.

It is brought forward a new energy management unit for managing electric devices, which energy management unit is a cloud connected IoT device configured: to receive settings data, said settings data comprising the preset energy demand levels of said electric devices; to receive external data, said external data comprising the current and upcoming spot-price of electricity; to receive device data from said electric devices, said device data comprising status data and/or measurement data of said electric devices; to determine a management action schedule based on said settings data and on said external data and on said device data; and to manage said electric devices utilising said management action schedule.

In a preferred embodiment, said energy management unit is configured to receive device data from an inverter unit, said device data comprising status data and/or measurement data of said inverter unit and/or status data and/or measurement data of a photovoltaic system and/or status data and/or measurement data of a battery unit; and said determined management action schedule is based on said settings data and on said external data and on said device data received from said electric devices and said device data received from said inverter unit; and said energy management unit is configured to manage said inverter unit for controlling said photovoltaic system and said battery unit utilising said management action schedule.

In a preferred embodiment, said energy management unit is configured to receive user control data from a user apparatus.

In a preferred embodiment, said energy management unit is configured to receive information from an external database server and to store information to an external database server.

In a preferred embodiment, said energy management unit is configured to receive said external data from data providers and/or from an external database server.

In a preferred embodiment, said energy management unit is configured to receive said settings data from an external database server and/or from a user apparatus.

In a preferred embodiment, said status data comprises operational status data, charge level status data and/or energy demand level status data.

In a preferred embodiment, said measurement data comprises ambient characteristics measurement data, charge level measurement data and/or energy demand level measurement data.

In a preferred embodiment, said said electric devices are managed by changing the energy charging/discharging levels of said electric devices and/or said photovoltaic system and/or of said battery unit, and/or by switching on/off said electric devices and/or said photovoltaic system and/or said battery unit.

In a preferred embodiment, said management action schedule comprises a time based schedule of management actions for said electric devices and/or said photovoltaic system and/or said battery unit.

In a preferred embodiment of said arrangement, said energy management unit comprises a main/carrier board and a CPU plugged into said main/carrier board providing said CPU power and the connectivity, said main/carrier board assembled in an aluminium case.

Furthermore, it is brought forward a method for energy management of electric devices in an arrangement comprising electric devices and an energy management unit of the invention, in which settings data is received by said energy management unit, said settings data comprising the preset energy demand levels of said electric devices; external data is received by said energy management unit, said external data comprising the current and upcoming spot-price of electricity; device data from said electric devices is received by said energy management unit, said device data comprising status data and/or measurement data of said electric devices; a management action schedule is determined based on said settings data and on said external data and on said device data; and said electric devices are managed utilising said management action schedule.

In a preferred embodiment of said method, device data from an inverter unit by said energy management unit, said device data comprising status data and/or measurement data of said inverter unit and/or status data and/or measurement data of a photovoltaic system and/or status data and/or measurement data of a battery unit; said management action schedule is determined based on said settings data and on said external data and on said device data received from said electric devices and said device data received from said inverter unit; and said inverter unit is managed by said energy management unit for controlling said photovoltaic system and/or status data and/or measurement data of a battery unit utilising said management action schedule.

In a preferred embodiment of said method, user control data from a user apparatus is received by said energy management unit.

In a preferred embodiment of said method, said management action schedule comprises an hourly schedule for management actions for said electric devices and/or said photovoltaic system and/or said battery unit.

### BRIEF DESCRIPTION OF THE DRAWINGS

In the following, the present invention will be described in more detail by way of example and with reference to the attached drawings, in which:
Figure 1 illustrates an embodiment of an energy management unit according to the present invention in an arrangement comprising electric devices.
Figure 2 illustrates another embodiment of an energy management unit according to the present invention in an arrangement comprising electric devices.
Figure 3 illustrates a flow diagram of an embodiment of a method for energy management of electric devices in an arrangement comprising electric devices and an energy management unit according to the present invention.
Figure 4 illustrates a flow diagram of another embodiment of a method for energy management of electric devices in an arrangement comprising electric devices and an energy management unit according to the present invention.

The foregoing aspects, features and advantages of the invention will be apparent from the drawings and the detailed description related thereto.

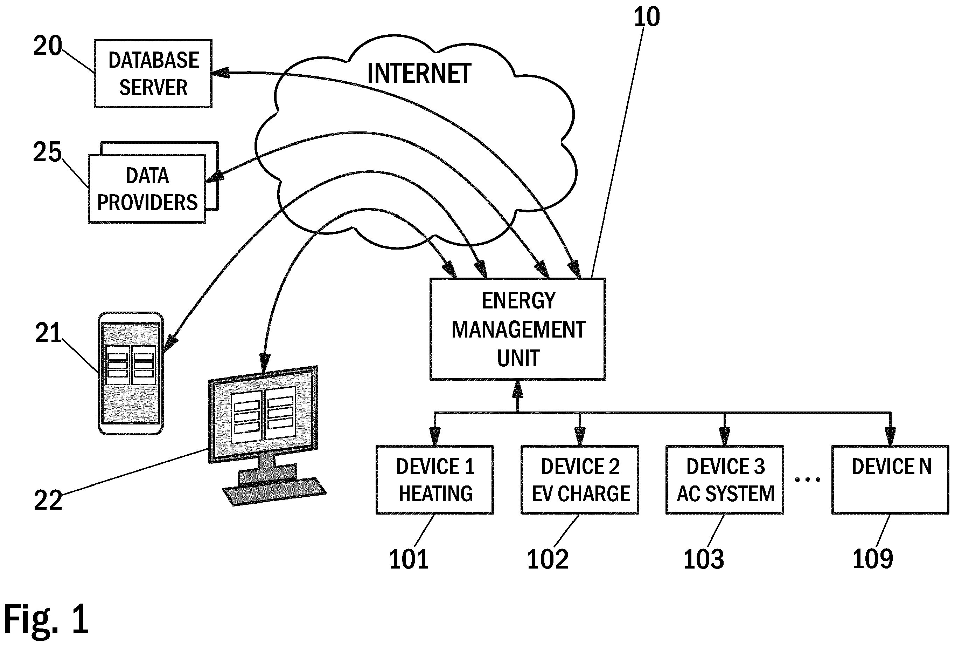

In the following, the invention will be described in greater detail by means of preferred embodiments with reference to the accompanying drawings of Figures 1 to 4.

### DETAILED DESCRIPTION

The energy management unit for managing electric devices according to one embodiment of the present invention is a cloud connected IoT device configured: to receive settings data, said settings data comprising the preset energy demand levels of said electric devices; to receive external data, said external data comprising the current and upcoming spot-price of electricity; to receive device data from said electric devices, said device data comprising status data and/or measurement data of said electric devices; to determine a management action schedule based on said settings data and on said external data and on said device data; and to manage said electric devices utilising said management action schedule.

Figure 1 illustrates an embodiment of an energy management unit according to the present invention in an arrangement comprising electric devices. The presented embodiment of an energy management unit 10 is a cloud connected IoT device (IoT, Internet of Things). Said energy management unit 10 is connected to and configured to manage a number of electric devices 101-103, 109. Said number of electric devices 101-103, 109 may comprise a heating device 101, such as an electrically controlled oil-heater 101. Said number of electric devices 101-103, 109 may comprise an EV charging device 102 for an electric vehicle (EV, Electric Vehicle). Said number of electric devices 101-103, 109 may also comprise an AC system 103 (AC, Air Conditioning) as well as a number of other electric devices 109.

In the presented embodiment said energy management unit 10 is configured to receive information from an external database server 20 and to store information to an external database server 20. Said external database server 20 may be a cloud database server 20, i.e. an external database server, which can be accessed via Internet.

In the presented embodiment said energy management unit 10 can be accessed over the Internet with a user apparatus 21, 22, such as e.g. a mobile phone 21 or a personal computer 22. With the help of said user apparatus 21, 22 the user may provide said energy management unit 10 with settings data, said settings data comprising the preset energy demand levels of said electric devices 101-103, 109. Said settings data may also comprise additional data relating to management of said electric devices 101-103, 109. Said said energy management unit 10 may store said settings data to said external database server 20. Furthermore, with the help of said user apparatus 21, 22 the user may provide said energy management unit 10 with settings data via said external database server 20.

In the presented embodiment said energy management unit 10 is configured to receive settings data, said settings data comprising the preset energy demand levels of said electric devices 101-103, 109. Said energy management unit 10 may receive said settings data from said user apparatus 21, 22 or from said external database server 20. Furthermore, with the help of said user apparatus 21, 22 the user may provide user control data for controlling said energy management unit 10. Respectively, said energy management unit 10 is configured to receive user control data from said user apparatus 21, 22.

In the presented embodiment said energy management unit 10 is configured to acquire and receive external data from data providers 25, said external data comprising the current and upcoming spot-price of electricity. Said data providers 25 may be any enterprises or public authorities publishing external data relating to management of said electric devices 101-103, 109. Such external data includes the current and upcoming spot-price of electricity. Such external data may comprise any kind of notices, warnings or control data released by an electric power distribution operating company. Such external data may also comprise any kind of weather data, notices or warnings released by public authorities or weather forecasting companies.

Said energy management unit 10 may also be configured to receive external data from said external database server 20. Respectively, said external database server 20 may be configured to acquire and receive external data from data providers 25, said external data comprising the current and upcoming spot-price of electricity.

In the presented embodiment said energy management unit 10 is configured to request and receive device data from said electric devices 101-103, 109 said device data comprising status data and/or measurement data of said electric devices 101-103, 109. Such status data may comprise any kind of operational status data, charge level status data and/or energy demand level status data. Such measurement data may comprise any kind of ambient characteristics measurement data, charge level measurement data and/or energy demand level measurement data.

In the presented embodiment said energy management unit 10 is configured to determine a management action schedule based on said settings data and on said external data and on said device data. Said management action schedule may comprise a time based schedule of management actions for said electric devices 101-103, 109. Said time based schedule may e.g. be an hourly schedule or a quarter-hourly (15 minutes) schedule.

In the presented embodiment said energy management unit 10 is configured to manage said electric devices 101-103, 109 utilising said management action schedule. Said energy management unit 10 may manage said electric devices 101-103, 109 by changing the energy charging/discharging levels of said electric devices 101-103, 109 and/or by switching on/off said electric devices 101-103, 109.

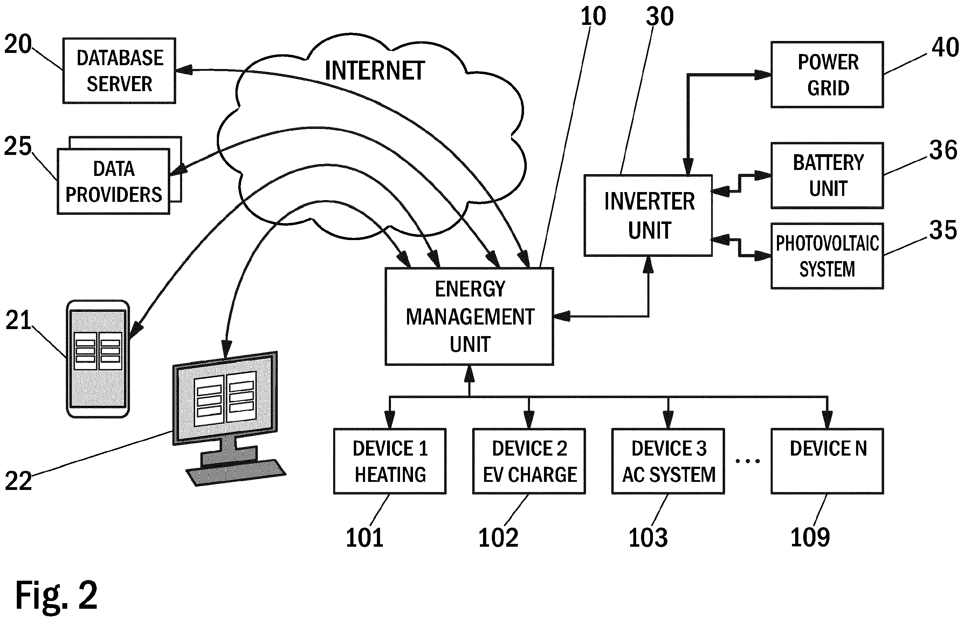

Figure 2 illustrates another embodiment of an energy management unit according to the present invention in an arrangement comprising electric devices. In the presented another embodiment said arrangement comprises a number of electric devices 101-103, 109 and also a photovoltaic system 35 a battery unit 36. Said photovoltaic system 35 and said battery unit 36 are connected to an electric power grid 40 via an inverter unit 30. Said inverter unit 30 is configured to control said photovoltaic system 35 and said battery unit 36. Said inverter unit 30 is connected to said energy management unit 10. Said inverter unit 30 configured to receive management and control instructions from said energy management unit 10. Said number of electric devices 101-103, 109 may comprise a heating device 101, an EV charging device 102, an AC system 103 as well as a number of other electric devices 109. The presented embodiment of an energy management unit 10 is a cloud connected IoT device connected to and configured to manage a number of electric devices 101-103, 109 and said inverter unit 30.

In the presented another embodiment said energy management unit 10 is configured to receive information from an external database server 20 and to store information to an external database server 20. Said energy management unit 10 can be accessed over the Internet with a user apparatus 21, 22, such as e.g. a mobile phone 21 or a personal computer 22. With the help of said user apparatus 21, 22 the user may provide said energy management unit 10 with settings data, said settings data comprising the preset energy demand levels of said electric devices 101-103, 109 and/or additional data relating to management of said electric devices 101-103, 109. Said said energy management unit 10 may store said settings data to said external database server 20. Furthermore, with the help of said user apparatus 21, 22 the user may provide said energy management unit 10 with settings data via said external database server 20. Said energy management unit 10 is configured to receive settings data, said settings data comprising the preset energy demand levels of said electric devices 101-103, 109. Said energy management unit 10 may receive said settings data from said user apparatus 21, 22 or from said external database server 20. Furthermore, with the help of said user apparatus 21, 22 the user may provide user control data for controlling said energy management unit 10. Respectively, said energy management unit 10 is configured to receive user control data from said user apparatus 21, 22.

In the presented another embodiment said energy management unit 10 is configured to acquire and receive external data from data providers 25, said external data comprising the current and upcoming spot-price of electricity. Said data providers 25 may be any enterprises or public authorities publishing external data relating to management of said electric devices 101-103, 109. Such external data includes the current and upcoming spot-price of electricity. Such external data may comprise any kind of notices, warnings or control data released by an electric power distribution operating company. Such external data may also comprise any kind of weather data, notices or warnings released by public authorities or weather forecasting companies. Said energy management unit 10 may also be configured to receive external data from said external database server 20. Respectively, said external database server 20 may be configured to acquire and receive external data from data providers 25, said external data comprising the current and upcoming spot-price of electricity.

In the presented embodiment said energy management unit 10 is configured to request and receive device data from said electric devices 101-103, 109 and/or from said inverter unit 30, said device data comprising status data and/or measurement data of said electric devices 101-103, 109 and/or of said inverter unit 30 and/or of said photovoltaic system 35 and/or of said battery unit 36. Such status data may comprise any kind of operational status data, charge level status data and/or energy demand level status data. Such measurement data may comprise any kind of ambient characteristics measurement data, charge level measurement data and/or energy demand level measurement data.

In the presented another embodiment said energy management unit 10 is configured to determine a management action schedule based on said settings data and on said external data and on said device data. Said management action schedule may comprise a time based schedule of management actions for said electric devices 101-103, 109. Said time based schedule may e.g. be an hourly schedule or a quarter-hourly (15 minutes) schedule.

In the presented embodiment said energy management unit 10 is configured to manage said electric devices 101-103, 109 utilising said management action schedule. Said energy management unit 10 is also configured to manage said inverter unit 30 for controlling said photovoltaic system 35 and said battery unit 36 utilising said management action schedule. Said energy management unit 10 may manage said electric devices 101-103, 109 and/or said photovoltaic system 35 and/or said battery unit 36 by changing the energy charging/discharging levels of said electric devices 101-103, 109 and/or said photovoltaic system 35 and/or said battery unit 36 and/or by switching on/off said electric devices 101-103, 109 and/or said photovoltaic system 35 and/or said battery unit 36.

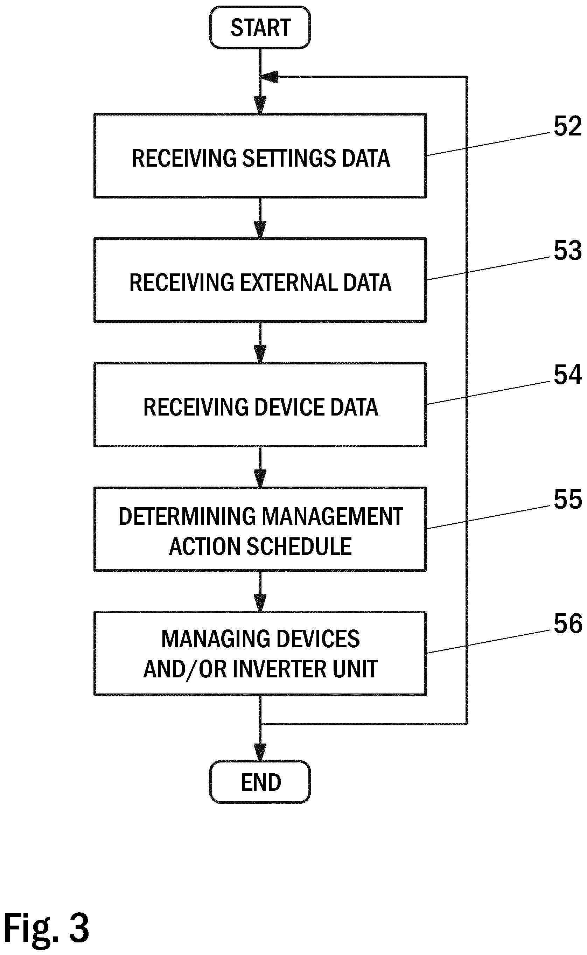

Figure 3 illustrates a flow diagram of an embodiment of a method for energy management of electric devices in an arrangement comprising electric devices and an energy management unit according to the present invention. In the method according to the present embodiment, settings data is first received 52 by said energy management unit 10, said settings data comprising the preset energy demand levels of said electric devices 101-103, 109. Thereafter, external data is received 53 by said energy management unit 10, said external data comprising the current and upcoming spot-price of electricity.

As the next step in the presented embodiment, device data from said electric devices 101-103, 109 and/or from said inverter unit 30 is received 54 by said energy management unit 10, said device data comprising status data and/or measurement data of said electric devices 101-103, 109 and/or of said inverter unit 30 and/or of said photovoltaic system 35 and/or of said battery unit 36. Thereafter, in the presented embodiment, management action schedule is determined based on said settings data and on said external data and on said device data.

As the next step in the presented embodiment, said electric devices 101-103, 109 and/or said inverter unit 30 are managed 56 by said energy management unit 10 utilising said management action schedule. Respectively, said inverter unit 30 may control said photovoltaic system 35 and said battery unit 36 utilising said management action schedule.

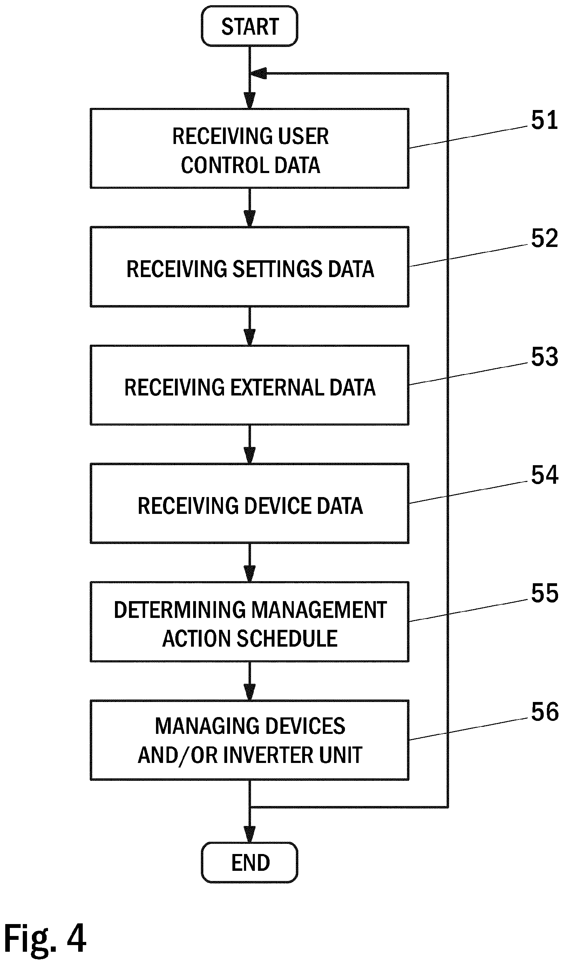

Figure 4 illustrates a flow diagram of another embodiment of a method for energy management of electric devices in an arrangement comprising electric devices and an energy management unit according to the present invention. In the present another embodiment, with the help of said user apparatus 21, 22, the user provides to said energy management unit 10 user control data for controlling said energy management unit 10. Respectively, in the method according to the present another embodiment, user control data is first received 51 by said energy management unit 10, said user control data comprising instructions for controlling said energy management unit 10. Thereafter, settings data is received 52 by said energy management unit 10, said settings data comprising the preset energy demand levels of said electric devices 101-103, 109.

As the next step in the presented another embodiment, external data is received 53 by said energy management unit 10, said external data comprising the current and upcoming spot-price of electricity. Thereafter, device data from said electric devices 101-103, 109 and/or from said inverter unit 30 is received 54 by said energy management unit 10, said device data comprising status data and/or measurement data of said electric devices 101-103, 109 and/or of said inverter unit 30 and/or of said photovoltaic system 35 and/or of said battery unit 36.

As the next step in the presented another embodiment, management action schedule is determined based on said settings data and on said external data and on said device data. Thereafter, said electric devices 101 - 103, 109 and/or said inverter unit 30 are managed 56 by said energy management unit 10 utilising said management action schedule. Respectively, said inverter unit 30 may control said photovoltaic system 35 and said battery unit 36 utilising said management action schedule.

The energy management unit 10 according to the present invention relates to the area of so called "green energy" and more precisely levelling out peaks in energy supply and demand. The energy management unit 10 according to the present invention is a cloud connected IoT device with the special feature of being aware of current and upcoming spot-price of electricity and thereby being able to control other devices in any kind of application specifically based on the spot-price information. The energy management unit 10 according to the present invention can for example be used in the area of "green energy" solar power plants with energy storage to automatically control the inverter to export stored energy to the grid when the demand is peaking or it can control the heating of a boiler to use electricity in place of oil when the supply of electricity is peaking helping to solve the problem of supply and demand peaks of electricity but also for example optimizing profits from a small scale solar power plant with energy storage.

The energy management unit 10 according to the present invention may be a cloud-connected IoT device that can automatically control other devices using communication protocol or general purpose inputs and outputs and using the current and/or upcoming spot-price of electricity to decide what control commands to send or what general purpose outputs to set. The energy management unit 10 according to the present invention is aware of the current and upcoming spot-price of electricity and thereby aware of the current supply and demand level and upcoming peaks in supply and demand of energy.

Let us further describe an example of the functionality of the invention in some detail. As the spot prices are available and received the invention finds the max spot price hour and decides that is an hour where it will control the Inverter in the solar power plant to fully feed to grid any stored and overproduced energy by writing to the inverters dedicated operation mode modbus register over ModbusTCP. In this specific solar power plant it takes 2 hours to unload the stored energy from the batteries so it will also check which one of the hour above or below the "max hour" that have the higher price and decide that is also an hour where it will fully feed to grid. Then it will set preceding and following two hours as maximum self-consumption and charging battery hours and so on looping through all hours of the day so it will cycle the battery while the spot price is higher than the set limit. Always when the price is below set limit it will just wait and top-up the battery charge if the load has consumed the battery to below 80% so that it will be ready and charged when the demand of the electricity is again high.

Let us further describe the invention by another possible application example. The invention knows that in a set number of hours the spot price on electricity will dip below the limit where it is more profitable to heat the boiler with electricity compared to heating it with oil. The invention sets an output that prevents the oil-heater from starting even if the thermostat is requesting it to start. When the set number of hours (e.g. two hours) has passed and the spot-price has dropped below the limit the invention will set another output that is activating the electrical heating of the boiler. When the spot price has again climbed above the limit where the oil-heating is more profitable it will stop the electrical heating and release the bypass of the thermostat so that the oil-heater is again operating based on the control of the thermostat.

With the help of the energy management unit according to the present invention the electric devices can be properly managed and controlled to use energy when energy supply is high. Furthermore, the solar power production sites can be managed to export their produced energy when the demand is high and use small scale battery storage to store the energy when the demand is low. In other applications the invention can be used to control other devices to use energy when energy supply is high. With the help of the energy management unit according to the present invention the problematic supply and demand peaks in the power grid is helped to in levelling out.

It is to be understood that the above description and the accompanying Figures are only intended to teach the best way known to the inventors to make and use the invention. It will be apparent to a person skilled in the art that the inventive concept can be implemented in various ways. The above-described embodiments of the invention may thus be modified or varied, without departing from the invention, as appreciated by those skilled in the art in light of the above teachings. It is therefore to be understood that the invention and its embodiments are not limited to the examples described above but may vary within the scope of the claims and their equivalents.

## Claims

1. An energy management unit (10) for managing electric devices (101-103, 109) wherein said energy management unit (10) is a cloud connected IoT device configured:
- to receive settings data, said settings data comprising the preset energy demand levels of said electric devices (101-103, 109);
- to receive external data, said external data comprising the current and upcoming spot-price of electricity;
- to receive device data from said electric devices (101-103, 109), said device data comprising status data and/or measurement data of said electric devices (101-103, 109);
- to determine a management action schedule based on said settings data and on said external data and on said device data; and
- to manage said electric devices (101-103, 109) utilising said management action schedule.

2. An energy management unit (10) according to claim 1, wherein:
- said energy management unit (10) is configured to receive device data from an inverter unit (30), said device data comprising status data and/or measurement data of said inverter unit (30) and/or status data and/or measurement data of a photovoltaic system (35) and/or status data and/or measurement data of a battery unit (36); and
- said determined management action schedule is based on said settings data and on said external data and on said device data received from said electric devices (101-103, 109) and said device data received from said inverter unit (30); and wherein:
- said energy management unit (10) is configured to manage said inverter unit (30) for controlling said photovoltaic system (35) and said battery unit (36) utilising said management action schedule.

3. An energy management unit (10) according to claim 1 or claim 2, wherein said energy management unit (10) is configured to receive user control data from a user apparatus (21, 22).

4. An energy management unit (10) according to any of the claims 1-3, wherein said energy management unit (10) is configured to receive information from an external database server (20) and to store information to an external database server (20).

5. An energy management unit (10) according to any of the claims 1-4, wherein said energy management unit (10) is configured to receive said external data from data providers (25) and/or from an external database server (20).

6. An energy management unit (10) according to any of the claims 1-5, wherein said energy management unit (10) is configured to receive said settings data from an external database server (20) and/or from a user apparatus (21, 22).

7. An energy management unit (10) according to any of the claims 1-6, wherein said status data comprises operational status data, charge level status data and/or energy demand level status data.

8. An energy management unit (10) according to any of the claims 1-7, wherein said measurement data comprises ambient characteristics measurement data, charge level measurement data and/or energy demand level measurement data.

9. An energy management unit (10) according to any of the claims 1-8, wherein said electric devices (101-103, 109) are managed by changing the energy charging/discharging levels of said electric devices (101-103, 109) and/or said photovoltaic system (35) and/or of said battery unit (36), and/or by switching on/off said electric devices (101-103, 109) and/or said photovoltaic system (35) and/or said battery unit (36).

10. An energy management unit (10) according to any of the claims 1-9, wherein said management action schedule comprises a time based schedule of management actions for said electric devices (101-103, 109) and/or said photovoltaic system (35) and/or said battery unit (36).

11. An energy management unit (10) according to any of the claims 1-10, wherein said energy management unit (10) comprises a main/carrier board and a CPU plugged into said main/carrier board providing said CPU power and the connectivity, said main/carrier board assembled in an aluminium case.

12. A method for energy management of electric devices (101-103, 109) in an arrangement comprising electric devices (101-103, 109) and an energy management unit (10) according to any of the claims 1-10, in which:
- settings data is received (52) by said energy management unit (10), said settings data comprising the preset energy demand levels of said electric devices (101-103, 109);
- external data is received (53) by said energy management unit (10), said external data comprising the current and upcoming spot-price of electricity;
- device data from said electric devices (101-103, 109) is received (54) by said energy management unit (10), said device data comprising status data and/or measurement data of said electric devices (101-103, 109);
- a management action schedule is determined (55) based on said settings data and on said external data and on said device data; and
- said electric devices (101-103, 109) are managed (56) utilising said management action schedule.

13. A method according to claim 12, in which:
- device data from an inverter unit (30) is received by said energy management unit (10), said device data comprising status data and/or measurement data of said inverter unit (30) and/or status data and/or measurement data of a photovoltaic system (35) and/or status data and/or measurement data of a battery unit (36); and
- said management action schedule is determined based on said settings data and on said external data and on said device data received from said electric devices (101-103, 109) and said device data received from said inverter unit (30); and
- said inverter unit (30) is managed by said energy management unit (10) for controlling said photovoltaic system (35) and/or status data and/or measurement data of a battery unit (36) utilising said management action schedule.

14. A method according to claim 12 or to claim 13, in which user control data from a user apparatus (21, 22) is received (51) by said energy management unit (10).

15. A method according to any of the claims 12-14, in which said management action schedule comprises an hourly schedule for management actions for said electric devices (101-103, 109) and/or said photovoltaic system (35) and/or said battery unit (36).
